# EUROPEAN PATENT APPLICATION

(11) **EP 1 414 026 A1**
(43) Date of publication of application: **28.04.2004**
(21) Application number: 03256617.6
(22) Date of filing: 21.10.2003
(51) Int. Cl.: G11B 5/53

(54) **Head drum assembly**

(30) Priority: 21.10.2002 KR 2002064348
(71) Applicant: Samsung Electronics Co., Ltd., Suwon-city, Kyungki-do (KR)
(72) Inventor: Baik, Chung-hum, 832-2002, Byeokjeokgol Jugong Apt, Suwon-city, Gyunggi-do (KR); Lee, Seung-woo, 542-106, Shinnamusil Ssangyong Apt, Suwon-city, Gyunggi-do (KR); Kang, Tae-gil, 301-103, Daewo Apartment,, Suwon-city, Gyunggi-do (KR)
(74) Representative: Geary, Stuart Lloyd

(57) **Abstract**

In a head drum assembly for a tape recorder, a rotor case 141 is directly bonded to an outwardly facing surface of a rotary drum 110. An air gap G1 is present between a magnet yoke 151 and a stator coil 152 of a motor stator 150, instead of the conventional plastic spacer. The head drum assembly is uncomplicated and thus the cost of manufacturing is reduced.

## Description

A first aspect of the present invention relates to a head drum assembly for a tape player and/or recorder, the assembly comprising: a rotary drum, supporting a magnetic head; a fixed drum; a motor stator connected with the fixed drum; and a motor rotor on the rotary drum and including a rotor case, the rotary and fixed drums being fitted onto a shaft such that the motor stator faces the motor rotor. A second aspect of the invention relates to a method for assembling a head drum assembly for a tape player and/or recorder, the method comprising: providing a rotary drum with a magnetic head and with a motor rotor including a rotor case; providing a fixed drum with a motor stator; and fitting the rotary and fixed drums onto a shaft such that the motor stator faces the motor rotor.

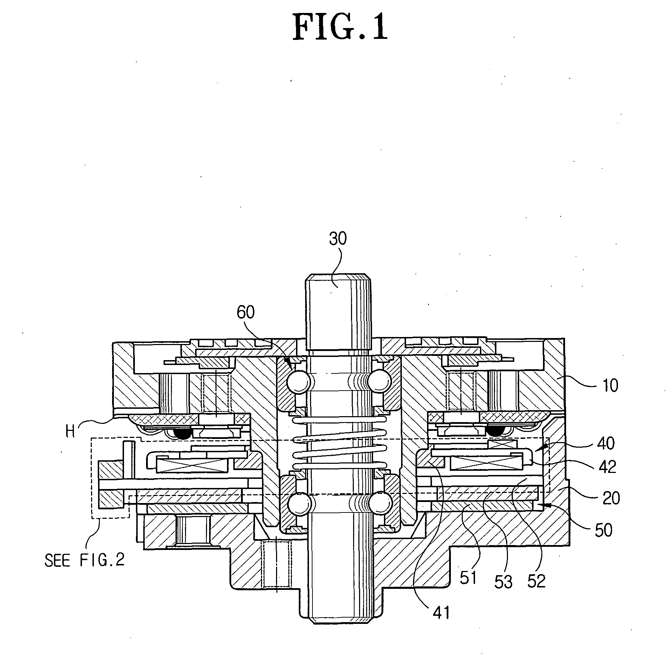

In general, tape players and recorders such as VCRs and camcorders are provided with a head drum assembly mounted for high-speed rotation. This enables information to be recorded and reproduced by the scanning of a magnetic head in relation to a magnetic tape. As shown in Figure 1, which is a cross-sectional schematic view of a head drum assembly, the head drum assembly comprises: a rotary drum 10, which rotatably supports a magnetic head H for recording and reproducing information by scanning a running magnetic tape; a fixed drum 20, which is press-fitted onto a lower part of a shaft 30 engaged in a central axial bore of the rotary drum 10; a motor stator 50 mounted in the fixed drum 20; and a motor rotor 40 mounted opposite to the motor stator 50 and engaged with the rotary drum 10. A bearing 60 supports the rotary drum 10 on the shaft 30.

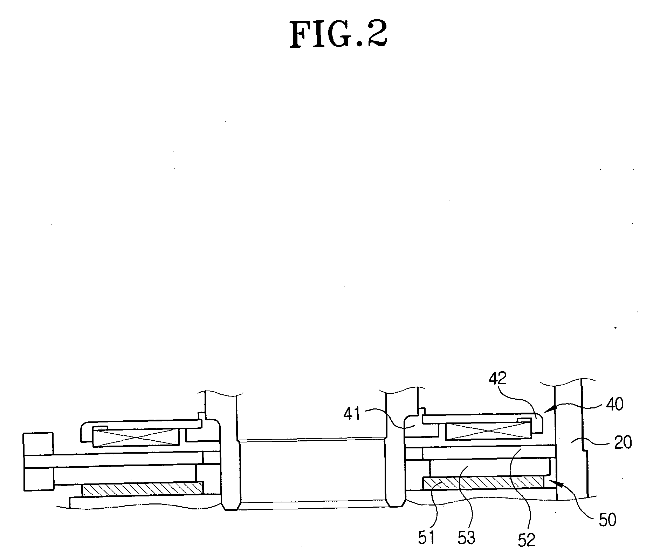

Referring to Figure 2, which is a detailed partial view, the conventional head drum assembly, it will be seen that the motor rotor 40 has a rotor case 42 supported by a rotor bush 41, which is engaged onto the outer circumferential portion of the lower part of the rotary drum 10. In addition, the motor stator 50 uses a magnet yoke 51 to provide an appropriate magnetising force having regard to the magnetic head H, which operates using magnetic fields. Therefore, a plastic spacer 53 is interposed and bonded between the magnet yoke 51 and a stator coil 52 so that a predetermined gap can be formed and maintained between the magnet yoke 51 and the stator coil 52.

The first aspect of the invention is characterised in that the rotor case is directly bonded to the rotary drum.

The second aspect of the invention is characterised in directly bonding the rotor case to the rotary drum.

These aspects can provide an assembly with fewer components, thus potentially reducing complexity and manufacturing costs.

An embodiment of the present invention will now be described, by way of example only, with reference to the accompanying drawings, in which:
Figure 1 is a cross-sectional schematic view of a conventional head drum assembly of a tape recorder;
Figure 2 is a detailed partial cross-sectional view of part of the assembly of Figure 1;
Figure 3 is a cross-sectional schematic view which shows a head drum assembly of a tape recorder according to the invention; and
Figure 4 is a detailed partial cross-sectional schematic view of part of the assembly of Figure 3.

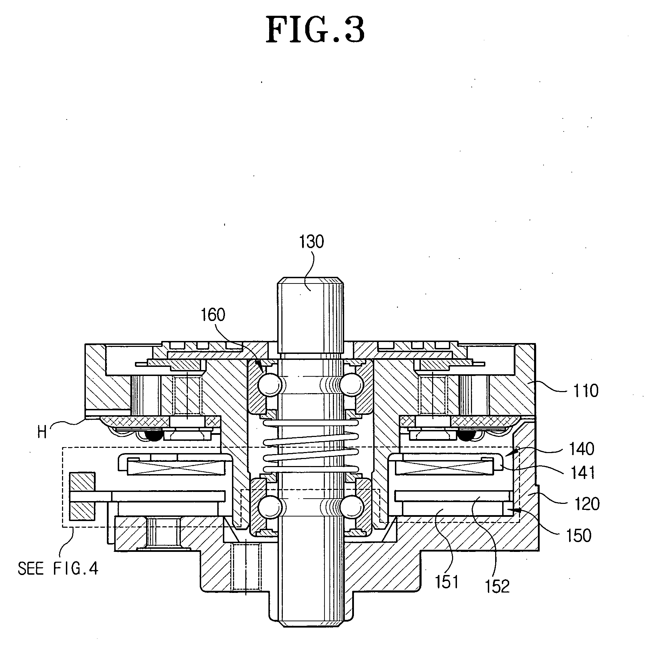

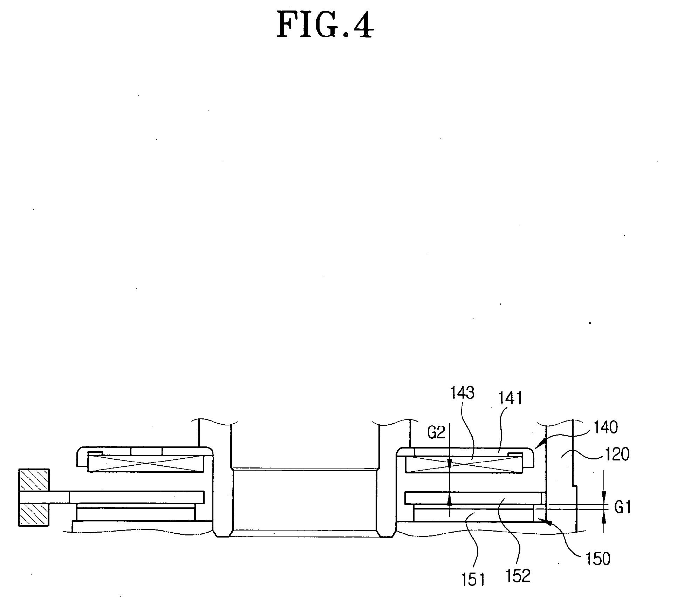

Referring to Figures 3 and 4, the head drum assembly 100 of a tape recorder according to the invention comprises: a rotary drum 110, which rotatably supports a magnetic head H for recording and reproducing information by scanning a running magnetic tape; a fixed drum 120 press-fitted onto the lower part of a shaft 130; a motor stator 150 provided in the fixed drum 120; and a motor rotor 140 provided opposite to the motor stator 150. The fixed drum 120 is supported on the shaft 140 parallel to the rotary drum 110. The motor rotor 140 is connected to the rotary drum 110. A rotor case 141 of the motor rotor 140 is directly bonded to an outer circumferential surface, alternatively described as an outwardly facing surface, of the rotary drum 110.

The head drum assembly preferably comprises a magnet yoke 151 and a stator coil 152 provided in the motor stator 150. The magnet yoke 151 and the stator coil 152 are sequentially stacked on the fixed drum 120 with a constant gap G1 maintained between them. Because the rotor case 141 of the motor rotor 140 is directly bonded to the outer surface of the lower part of the rotary drum 110, the rotor bush (41 in Figure 1) in the conventional construction can be removed (and hence its assembly step eliminated), whereby manufacturing costs can be reduced.

In addition, because a predetermined gap is formed between the magnet yoke 151 and the stator coil 152 provided in the motor stator 150, the head drum assembly does not require the spacer (53 in Figure 1) used in the conventional construction. Thus, the number of manufacturing steps and thereby the costs can be reduced.

Referring to Figure 4, it can be seen that the motor stator 150 can provide motor stator characteristics identical to a conventional stator. The conventional motor stator characteristics are achieved if a substantially constant gap G2 between the motor rotor 140 and the motor stator 150 is adjusted to be in the range of about 0.3 mm to 0.4 mm, preferably about 0.36 mm. The magnetising force of the rotor magnet 143 can also be controlled, for example by lowering the magnetising force. A substantially constant gap G1 between the magnetic yoke 151 and the stator coil 152 is maintained within the range of 0 to 0.03 mm.

Consequently, it is possible to omit the rotor bush 41 and the spacer 53 from the component list in a head drum assembly of a tape recorder built in accordance with the present invention. Furthermore, manufacturing steps involving those parts can be omitted. Thus, the cost of manufacturing the assembly can be reduced.

Whilst one embodiment of the present invention has been shown and described, the present invention is not limited to this. Variant embodiments will be envisaged by those skilled in the art. The scope of the invention is defined only by the appended claims.

## Claims

1. A head drum assembly for a tape player and/or recorder, the assembly comprising:
a rotary drum (110), supporting a magnetic head (H);
a fixed drum (120);
a motor stator (150) connected with the fixed drum; and
a motor rotor (140) on the rotary drum and including a rotor case (141), the rotary and fixed drums being fitted onto a shaft (130) such that the motor stator faces the motor rotor,
**characterised in that** the rotor case (141) is directly bonded to the rotary drum.

2. An assembly according to claim 1, in which the rotor case is directly bonded to an outwardly facing surface of the rotary drum.

3. An assembly according to claim 1 or claim 2, wherein the motor stator (150) comprises:
a magnetic yoke (151); and
a stator coil (152) supported with the fixed drum such that it is separated from the magnetic yoke by a gap.

4. An assembly as claimed in claim 3, wherein the gap is an air gap.

5. An assembly according to any preceding claim, wherein the gap is less than 0.03 mm.

6. An assembly according to any preceding claim, wherein the gap between the motor stator and the motor rotor is in the range of 0.3 mm to 0.4 mm.

7. An assembly according to any preceding claim, wherein the gap between the motor stator and the motor rotor is about 0.36 mm.

8. An assembly according to any preceding claim, wherein the rotor comprises a rotor magnet (143) having a controllable magnetising force.

9. An assembly according to claim 8, wherein the magnetising force of the rotor magnet is controlled to be lower than that of a corresponding conventional motor stator.

10. A method for assembling a head drum assembly for a tape player and/or recorder, the method comprising:
providing a rotary drum (110) with a magnetic head (H) and with a motor rotor (140) including a rotor case (141);
providing a fixed drum (120) with a motor stator (150); and
fitting the rotary and fixed drums onto a shaft (130) such that the motor stator faces the motor rotor,
**characterised in** directly bonding the rotor case to the rotary drum.

11. A method according to claim 10, in which the bonding step comprises directly bonding the rotor case (141) to an outwardly facing surface of the rotary drum.

12. A method according to claim 10 or claim 11, wherein the motor stator comprises a magnetic yoke (151) and a stator coil (153), and the method comprises supporting the stator coil with the fixed drum such that it is separated from the magnetic yoke by a gap.

13. A method according to claim 12, wherein the gap is an air gap.

14. A method according to claim 11 or claim 12, wherein the gap is less than 0.03 mm.

15. A method according to any of claims 10 to 14, wherein the fitting step comprises providing a gap in the range of 0.3 mm to 0.4 mm between the motor stator and the motor rotor.

16. A method according to any of claims 10 to 15, wherein the fitting step comprises providing a gap of about 0.36 mm between the motor stator and the motor rotor.

17. A method according to any of claims 10 to 16, comprising controlling the magnetising force of a rotor magnet (143) forming part of the rotor.

18. A method according to claim 17, comprising controlling the magnetising force of the rotor magnet to be lower than that of a corresponding conventional motor stator.

19. A head drum assembly for a tape player/recorder comprising:
a rotary drum, which rotatably supports a magnetic head for recording and reproducing information by scanning a running magnetic tape;
a fixed drum press-fitted onto the lower part of a shaft engaged in a central axial bore of the rotary drum parallel to the rotary drum;
a motor stator provided in the fixed drum; and
a motor rotor provided opposite to the motor stator, the motor rotor being connected to the rotary drum, and a rotor case of the motor rotor being directly bonded to an outer circumferential surface of the rotary drum.

20. The head drum assembly for a tape player/recorder according to claim 19, wherein the motor stator comprises:
a magnetic yoke; and
a stator coil, wherein a substantially constant first gap is maintained between the magnetic yoke and stator coil.

21. The head drum assembly for a tape player/recorder according to claim 19, wherein a substantially constant second gap is maintained between the motor rotor and motor stator.

22. The head drum assembly for a tape player/recorder according to claim 21, wherein the substantially constant second gap is in the range of 0.3 mm to 0.4 mm.

23. The head drum assembly for a tape player/recorder according to claim 21, wherein the substantially constant second gap is about 0.36 mm.

24. The head drum assembly for a tape player/recorder according to claim 20, wherein the substantially constant first gap is within the range of 0 to 0.03 mm.

25. The head drum assembly for a tape player/recorder according to claim 20, further comprising a rotor magnet, and wherein a magnetizing force of the rotor magnet is controlled.

26. The head drum assembly for a tape player/recorder according to claim 25, wherein the magnetic force of the rotor magnet is controlled to be lower than a conventional motor stator.

27. A method for manufacturing a head drum assembly for a tape player/recorder comprising:
press fitting a fixed drum onto a lower part of a shaft engaged in a central axial bore of a rotary drum parallel to the rotary drum, wherein the fixed drum comprises a motor stator, and wherein the rotary drum rotatably supports a magnetic head for recording and reproducing information by scanning a running magnetic tape; and
connecting a motor rotor to the rotary drum, wherein a rotor case of the motor rotor is directly bonded to an outer circumferential surface of the rotary drum.

28. The method for manufacturing a head drum assembly for a tape player/recorder according to claim 27, wherein the motor stator comprises:
a magnetic yoke; and
a stator coil, wherein a substantially constant first gap is maintained between the magnetic yoke and stator coil.

29. The method for manufacturing a head drum assembly for a tape player/recorder according to claim 27, wherein a substantially constant second gap is maintained between the motor rotor and motor stator.

30. The method for manufacturing a head drum assembly for a tape player/recorder according to claim 29, wherein the substantially constant second gap is in the range of 0.3 mm to 0.4 mm.

31. The method for manufacturing a head drum assembly for a tape player/recorder according to claim 29, wherein the substantially constant second gap G2 is about 0.36 mm.

32. The method for manufacturing a head drum assembly for a tape player/recorder according to claim 28, wherein the substantially constant first gap is within the range of 0 to 0.03 mm.

33. The method for manufacturing a head drum assembly for a tape player/recorder according to claim 28, wherein the head drum assembly further comprises a rotor magnet, and wherein a magnetizing force of the rotor magnet is controlled.

34. The method for manufacturing a head drum assembly for a tape player/recorder according to claim 33, wherein the magnetic force of the rotor magnet is controlled to be lower than a conventional motor stator.
